# FASCICULE DE BREVET EUROPEEN

(11) **EP 1 436 763 B1**
(45) Date de publication et mention de la délivrance du brevet: **17.10.2007**
(21) Numéro de dépôt: 02799400.3
(22) Date de dépôt: 03.09.2002
(51) Int. Cl.: G06K 7/00, G06K 19/07

(54) **PROCEDE DE GESTION DES MOYENS RECEPTEURS D'UN TRANSPONDEUR AGENCE POUR COMMUNIQUER A RELATIVEMENT LONGUE DISTANCE**
VERFAHREN ZUR VERWALTUNG VON EMPFÄNGERMITTELN EINES TRANSPONDERS, DER FÜR KOMMUNIKATION ÜBER RELATIV LANGE DISTANZEN AUSGELEGT IST
METHOD FOR MANAGING RECEIVER MEANS OF A TRANSPONDER DESIGNED FOR RELATIVELY LONG-DISTANCE COMMUNICATION

(30) Priorité: 21.09.2001 EP 01203583
(43) Date de publication de la demande: 14.07.2004
(73) Titulaire: EM Microelectronic-Marin SA, 2074 Marin (CH)
(72) Inventeur: SACKSTEDER, Frédéric, CH-4415 Lausen (CH)
(74) Mandataire: Surmely, Gérard
(86) Numéro de dépôt international: PCT/EP2002/009818
(87) Numéro de publication internationale: WO 2003/027938

(56) Documents cités:
- EP-A- 0 492 482
- FR-A- 2 689 707
- US-A- 5 721 552

## Description

L'invention concerne un procédé de gestion des moyens récepteurs d'au moins un transpondeur agencé pour communiquer par ondes électromagnétiques à relativement longue distance avec au moins un lecteur ou émetteur, dans lequel il est prévu que ledit au moins un transpondeur soit activé périodiquement dans un mode d'écoute durant des périodes d'écoute ayant chacune une première durée prédéterminée lorsqu'aucune porteuse est détectée et ayant une deuxième durée supérieure à ladite première durée lorsqu'une porteuse est détectée par ce transpondeur.

Un transpondeur dans lequel les moyens récepteurs sont activés périodiquement est montré dans le document FR-2 689 707.

Il est connu du document EP 492 482 une carte sans contact à circuit intégré qui comprend deux circuits de réception susceptibles d'être reliés à l'antenne. Dans le mode de fonctionnement normal, seul le premier circuit est utilisé. Ce dernier a une valeur de seuil d'activation de l'unité centrale de la carte qui est inférieur à celle du deuxième circuit. Les moyens de réception de cette carte sont actifs en continu de sorte qu'elle consomme en permanence un certain courant électrique. Comme la réception de signaux parasites active l'unité centrale et augmente la consommation électrique, ce document propose de compter le nombre de réception de signaux parasites et de sélectionner le deuxième circuit de réception lorsque le nombre atteint une valeur limite pour laquelle l'énergie électrique perdue par la réception des signaux parasites est jugée trop importante pour assurer un bon fonctionnement futur de la carte. Le deuxième circuit de réception limite ou supprime la réception de signaux usuels par l'utilisateur. Ce dernier doit alors retourner sa carte au fournisseur pour qu'elle soit remplacée ou pour activer à nouveau le premier circuit de réception. L'enseignement de ce document ne permet pas de limiter au mieux la consommation électrique de la carte électronique en présence de signaux parasites et aussi de manière générale car les moyens de réception de la carte restent activés en permanence.

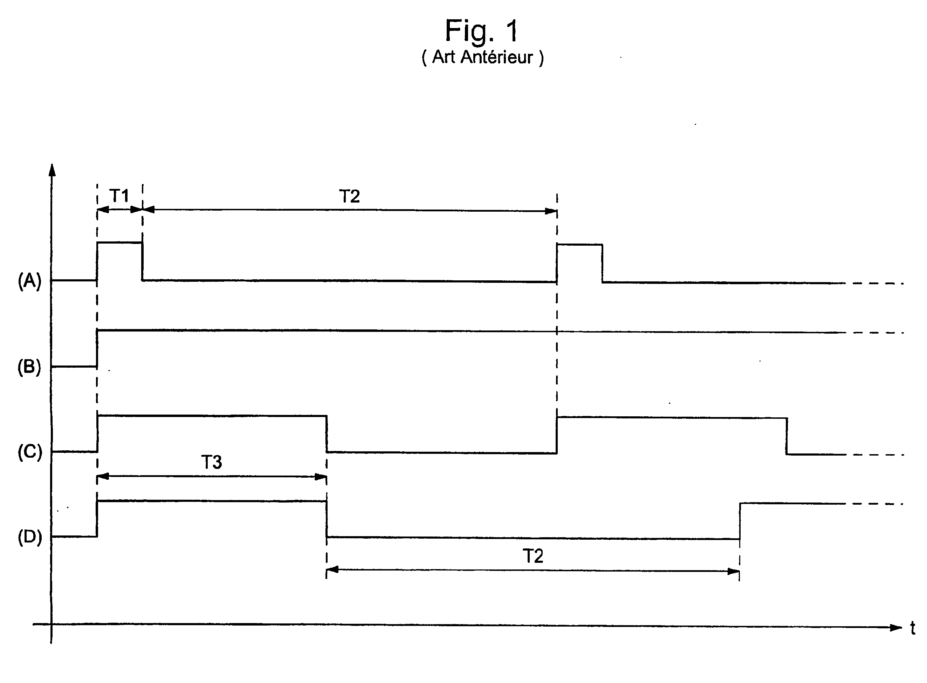

Contrairement au document EP 492 482, l'invention concerne un procédé de gestion des moyens récepteurs d'un transpondeur dans lequel ces moyens récepteurs sont activés périodiquement de la manière représentée schématiquement à la figure 1 par trois diagrammes d'activation représentant trois situations différentes et référencées A, B et C. Une variante de la troisième situation est représentée au diagramme D.

Le diagramme (A) montre l'activation des moyens récepteurs d'un transpondeur de l'art antérieur en l'absence de détection d'une porteuse. Les moyens récepteurs sont activés périodiquement dans un mode d'écoute durant des périodes d'écoute ayant une durée T1, ces périodes d'écoute étant séparées par un intervalle temporel T2. Le rapport cyclique T1/T2 est relativement faible de manière à minimiser la consommation d'énergie du transpondeur.

Lorsque le transpondeur reçoit un message à son adresse comme représenté dans le cas (B), le transpondeur détecte la présence d'une porteuse dans une période d'écoute et maintient les moyens récepteurs activés dans l'attente du message et également durant la réception de ce message en particulier. Par contre, lorsqu'il s'agit d'une porteuse parasite, le cas (C) intervient. Lorsque le transpondeur, dans une période d'écoute, reçoit une porteuse, il maintient les moyens récepteurs activés dans l'attente d'un message à son adresse. Après un certain temps, lorsqu'aucun message correctement détectable par le transpondeur n'intervient sur la porteuse et, dans une variante, également lorsque le message n'est pas à son adresse, les moyens récepteurs sont à nouveau désactivés après une durée T3 qui est supérieure à la durée T1 du cas (A). Ces moyens récepteurs sont à nouveau activés soit après un intervalle temporel égal à T1 + T2 depuis le début de la période d'écoute, soit après une durée T2 après la fin de la période d'écoute comme représenté au cas (D).

Etant donné que la durée T3 est supérieure à la durée T1 généralement de manière significative, le rapport cyclique entre une période d'activation et la période de désactivation qui suit dans le cas de la réception d'une porteuse parasite est fortement augmenté en général. Dans la situation du diagramme (A), on peut estimer la consommation moyenne à environ 1.5µA. Par contre, dans la situation du diagramme (C) ou (D), la consommation moyenne peut être d'environ dix fois supérieure, c'est-à-dire d'environ 15µA. Ainsi, en présence d'une porteuse parasite, le rapport des périodes "ON" et "OFF" des moyens récepteurs d'un transpondeur du type considéré est considérablement augmenté, ce qui entraîne une augmentation importante de la consommation du transpondeur. Ceci représente un inconvénient majeur étant donné que le stockage d'énergie est limité dans un transpondeur.

Le but de la présente invention est de pallier l'inconvénient susmentionné en proposant un procédé de gestion des moyens récepteurs d'au moins un transpondeur, agencé pour communiquer à relativement longue distance avec au moins un lecteur ou émetteur, permettant de diminuer la consommation d'un tel transpondeur en présence notamment de porteuses parasites et, dans un mode particulier, également dans le cas où une porteuse ne comprend pas de message à l'adresse du transpondeur considéré.

On comprend premièrement par "porteuse parasite" une porteuse fournie par un dispositif, notamment un émetteur, étranger au système de communication considéré. Dans un mode particulier, on comprend aussi par "porteuse parasite" un signal fourni par un quelconque lecteur ou émetteur sans message destiné à l'adresse du transpondeur considéré. Dans certains cas, le transpondeur peut également assimiler un message à son adresse reçu seulement partiellement ou de manière erronée à une porteuse parasite. Cependant, le transpondeur peut également être agencé de manière à détecter au moins dans certain cas qu'un message non reçu correctement est vraisemblablement un message qui le concerne et provient d'un lecteur ou émetteur du système de communication auquel il appartient.

Le but de l'invention susmentionné est atteint par le procédé de gestion des moyens récepteurs d'au moins un transpondeur du type décrit ci-avant et caractérisé par le fait que la sensibilité dudit au moins un transpondeur est diminuée, lorsqu'une porteuse parasite est détectée, au moins pour une prochaine période d'écoute, au moins lorsque la sensibilité du transpondeur est supérieure à une certaine valeur minimum.

On notera de suite qu'il n'est pas nécessaire pour la présente invention de déterminer une valeur minimum de sensibilité du transpondeur lorsque ses moyens de réception sont activés. Cependant, une telle caractéristique est prévue dans une variante de manière à éviter que la sensibilité ne chute trop en présence d'un fort bruit qui peut n'être que momentané.

Dans un mode de réalisation préféré, la sensibilité du transpondeur est augmentée, si elle a été précédemment réduite, après une période donnée de sensibilité réduite ou d'absence de réception de porteuse parasite par ce transpondeur.

Grâce aux caractéristiques de l'invention mentionnées ci-dessus, il est possible de réduire considérablement la consommation d'énergie d'un transpondeur lorsque celui-ci est situé dans le champ de signaux parasites, dans la plage de fréquences qui est la sienne. En effet, tant que le transpondeur détecte la présence d'une porteuse parasite, il diminue sa sensibilité au moins jusqu'à une certaine valeur minimum, de manière à ne plus détecter cette porteuse parasite et ainsi ne plus prolonger les périodes d'écoute suivantes dans l'attente d'un message. La caractéristique supplémentaire du mode de réalisation préféré susmentionné permet d'augmenter à nouveau la sensibilité du transpondeur au moins pour une période d'écoute de manière périodique. Si la porteuse parasite a disparu ou que son amplitude est devenu moindre, notamment dû à un déplacement du transpondeur, ce dernier jouit alors à nouveau d'une sensibilité optimale.

Selon un premier mode de réalisation, la variation de sensibilité est effectuée par la variation du gain d'un amplificateur agencé dans le transpondeur pour amplifier les signaux entrant.

Dans un deuxième mode de réalisation de l'invention, la variation de la sensibilité du transpondeur est effectuée au moyen d'un atténuateur de l'amplitude des signaux entrant, en variant le facteur d'atténuation de cet atténuateur.

L'invention sera décrite ci-après de manière plus détaillée à l'aide du dessin ci-annexé donné à titre d'exemple nullement limitatif, dans lequel :
- la figure 1, déjà décrite, montre les diagrammes d'activation de moyens récepteurs d'un transpondeur dans trois situations de réception différentes;
- la figure 2 représente partiellement un transpondeur selon un premier mode de réalisation de l'invention;
- les figures 3 et 4 représentent des diagrammes d'activation d'un transpondeur selon l'invention en présence d'une porteuse parasite; et
- la figure 5 représente schématiquement un transpondeur selon un deuxième mode de réalisation de l'invention.

Le transpondeur 2 selon le premier mode de réalisation comprend un amplificateur 4 de signaux entrant SE, une unité 6 de détection du critère "porteuse parasite", et un compteur digital 8 commandé par l'unité 6 et également par un temporisateur 10 formant un compteur ou décompteur temporel. Le compteur digital est relié à l'amplificateur de manière à commander le gain de ce dernier en fonction de sa valeur instantanée. D'autres modes de réalisation peuvent être envisagés par l'homme du métier.

On remarquera que l'unité de détection 6 peut être intégrée au circuit de démodulation des signaux entrant ou former un circuit indépendant placé notamment en aval de ce circuit de démodulation. L'unité 6 et le temporisateur 18 sont également reliés entre eux.

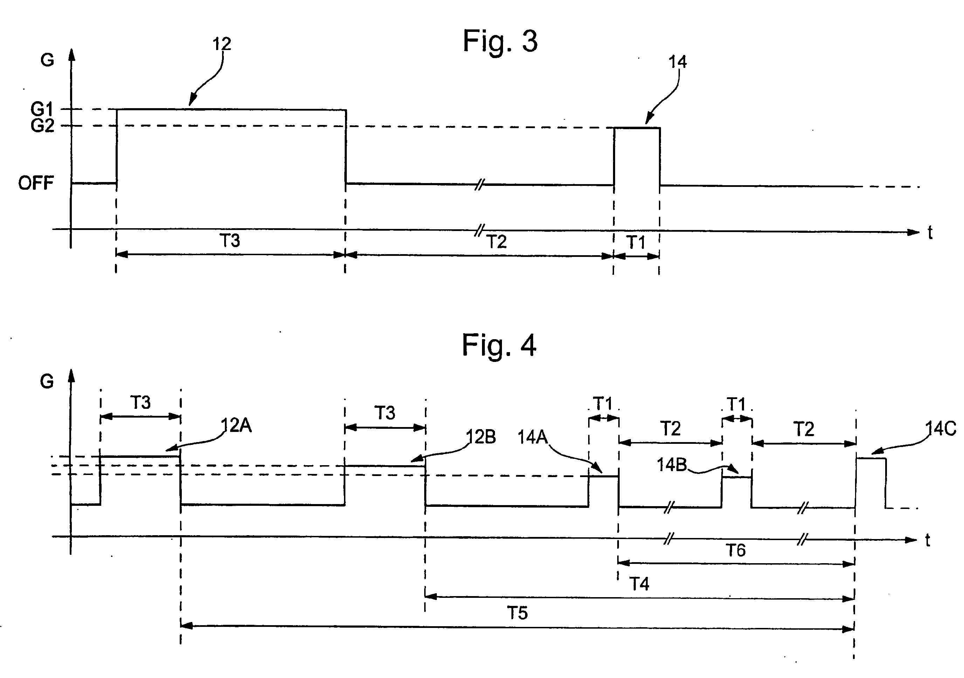

A la figure 3 est représenté un diagramme d'activation de l'amplificateur 4 où le gain G est donné en ordonnée. Lors d'une certaine période d'écoute 12 au cours de laquelle le transpondeur 2 reçoit une porteuse parasite, le gain de l'amplificateur 4 est égal à G1. Le transpondeur 2 détecte qu'il s'agit d'une porteuse parasite et termine la période d'écoute 12 après une durée T3. Selon l'invention, la valeur du compteur 8 est modifiée de manière à ce que le gain soit diminué de la valeur G1 à G2 pour la période d'écoute suivante 14. Dans la variante de cette figure 3, la diminution du gain à la valeur G2 est suffisante pour diminuer la sensibilité du transpondeur de manière à ce que la porteuse parasite détectée durant la période 12 ne soit plus détectée durant la période 14 qui a alors seulement une durée T1. Comme dans le cas de la figure 1 (D) les périodes d'activation 12 et 14 sont séparées par une période de désactivation T2, de même que la période d'écoute 14 et la période qui lui succède.

A la figure 4, le gain G de l'amplificateur 4 est diminué une première fois après la période d'écoute 12A dans laquelle une porteuse parasite est reçue, et une seconde fois dans la période d'écoute 12B où la porteuse parasite est toujours reçue. Par contre, lors de la période d'écoute suivante 14A, cette porteuse parasite n'est plus reçue et la durée d'activation du transpondeur est égale à T1.

Selon un mode de réalisation préféré de l'invention, la sensibilité du transpondeur est augmentée à nouveau après une certaine période de sensibilité diminuée. Pour le transpondeur 2, cette augmentation de la sensibilité est effectuée par une augmentation du gain G de l'amplificateur 4. Pour ce faire, le temporisateur 10 est commandé pour mesurer dans une première variante une période T6 débutant sensiblement à la fin de la période 14A correspondant à la première période d'écoute où la porteuse parasite détectée précédemment n'est plus reçue par le transpondeur. Selon une deuxième variante, le temporisateur est réinitialisé à nouveau chaque fois qu'une porteuse parasite est reçue dans une période d'écoute et que le gain est diminué. Ainsi, la période T4 d'absence de réception de porteuse parasite commence sensiblement à la fin de la période d'écoute 12B. Selon une autre variante encore, il est possible de prévoir d'augmenter à nouveau la sensibilité du transpondeur après une période T5 de sensibilité diminuée, c'est-à-dire d'une certaine période où le gain a été diminué dans le cas du premier mode de réalisation du transpondeur.

Dans la variante représentée à la figure 4, le gain de la période 14C, suivant la période de sensibilité diminuée ou d'absence de réception de porteuse parasite, est augmenté à nouveau au niveau de sensibilité maximal correspondant à celui de la période 12A. Dans une autre variante, il est prévu que l'augmentation soit effectué par pas, le gain étant augmenté au niveau précédent pour une nouvelle période.

On remarquera que la diminution et l'augmentation du gain peut être effectuées de diverses manières. Par exemple, cela peut être effectué par pas de valeur fixe ou par pas proportionnel d'un certain facteur, notamment 10 à 20 %. On peut dans d'autres variantes prévoir une diminution plus forte lorsque le gain est proche de sa valeur maximale que lorsque celui-ci s'approche d'une valeur limite inférieure de la sensibilité du transpondeur.

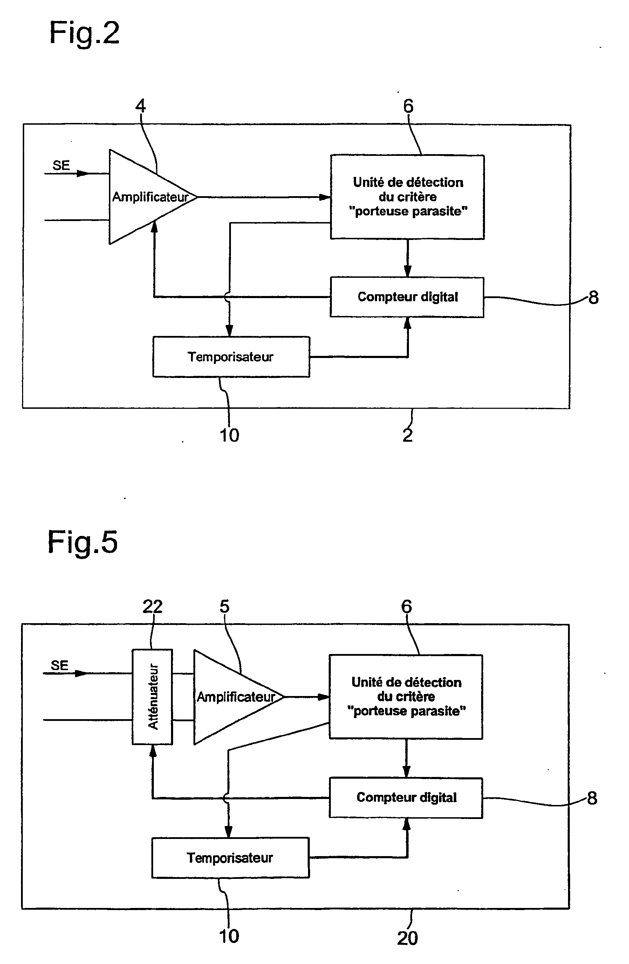

Dans un mode de réalisation particulier du transpondeur de la figure 2, il est prévu que l'amplificateur soit un amplificateur à gain variable (AGC) commandé automatiquement en fonction de l'amplitude du signal reçu. Dans ce cas, c'est la valeur maximum du gain qui est variée pour varier la sensibilité du transpondeur. Dans une variante perfectionnée, il est prévu d'intégrer dans le transpondeur des moyens de mesure du gain réel de l'amplificateur lors de la réception d'un signal, notamment d'une porteuse parasite, et de diminuer le gain maximal de manière à ce que sa valeur soit inférieure à celle de ce gain réel mesuré, au moins lorsqu'il est supérieur à une valeur minimum donnée. Le gain d'un amplificateur AGC donne directement une information du niveau du signal d'entrée. Ainsi, de manière à s'assurer que le signal parasite ne sera pas à nouveau détecté dans une prochaine période d'écoute, le gain maximum de cet amplificateur est diminué en dessous du gain nécessaire pour obtenir une amplitude de détection d'un signal souhaitée. Par exemple, le gain maximum est diminué à une valeur environ 20 % en dessous du gain réel mesuré dans une période 12 telle que représentée à la figure 3. Le gain réel est mémorisé notamment à l'aide d'une capacité (mémoire analogique) ou converti en un signal digital à l'aide d'un convertisseur connu de l'homme du métier.

Selon une variante de réalisation particulier, il est prévu que le transpondeur soit à même de reconnaître dans certain cas qu'un message détecté seulement partiellement ou de manière erronée provient d'un lecteur ou émetteur appartenant à son système de communication. Dans un tel cas, il est alors prévu dans ce mode de réalisation particulier d'augmenter à nouveau la sensibilité du transpondeur lorsque celle-ci a été précédemment diminuée de manière à pouvoir mieux détecter le message contenu dans la porteuse reçue lors d'une prochaine période d'activation. Dans une autre variante, il est également possible de maintenir les moyens de réception du transpondeur actif dès qu'un message provenant vraisemblablement d'un lecteur ou émetteur associé au transpondeur est reçu. Toutefois, il est possible de considérer une porteuse, fournie par un lecteur ou émetteur du système de communication du transpondeur, comme une porteuse parasite lorsque le message ne s'adresse pas au transpondeur considéré et de procéder de la manière décrite précédemment dans la présente description de l'invention ou de maintenir le gain à son niveau actuel dans ce cas-ci.

Un deuxième mode principal de réalisation d'un transpondeur selon l'invention est représenté à la figure 5. Le transpondeur 20 comprend un atténuateur 22 servant de moyens de variation de la sensibilité de ce transpondeur. Dans ce cas, le compteur digital 8 commande l'atténuateur 22 de manière à varier son facteur d'atténuation. Cet atténuateur 22 est placé en amont de l'amplificateur 5 relativement au signal entrant SE. Les autres éléments du transpondeur 20 correspondent à ceux décrits à la figure 2. Ainsi, après la détection d'une porteuse parasite, une augmentation du facteur d'atténuation engendre une diminution de sensibilité du transpondeur. Lorsque l'atténuation est suffisante, le transpondeur 20 ne détecte plus la porteuse parasite de sorte que les périodes d'écoute suivantes ont une durée T1.

## Revendications

1. Procédé de gestion de moyens récepteurs d'un transpondeur (2; 20) agencé pour communiquer par ondes électromagnétiques avec au moins un lecteur ou émetteur, dans lequel il est prévu que ces moyens récepteurs de ce transpondeur soient activés périodiquement dans un mode d'écoute, ces moyens récepteurs étant ainsi activés (ON) durant des périodes d'écoute entre lesquelles ils sont désactivés (OFF), ces périodes d'écoute ayant chacune une première durée prédéterminée (T1) lorsque aucune porteuse n'est détectée et ayant une deuxième durée (T3) supérieure à ladite première durée lorsqu'une porteuse est détectée dans une période d'écoute, **caractérisé en ce que**, lorsqu'une porteuse détectée dans une période d'écoute s'avère être une porteuse parasite, la sensibilité dudit transpondeur est diminuée pour au moins une prochaine période d'écoute, au moins lorsque la sensibilité dudit transpondeur est supérieure à une certaine valeur minimum, et **en ce que**, après cette au moins une prochaine période d'écoute, ladite sensibilité est augmentée par des moyens de commande du transpondeur pour au moins une période d'écoute ultérieure.

2. Procédé de communication selon la revendication 1, **caractérisé en ce que** la sensibilité dudit transpondeur est augmentée, si elle a été précédemment diminuée, après une période donnée de sensibilité diminuée (T5) ou d'absence de réception de porteuse parasite (T4; T6).

3. Procédé selon la revendication 2, **caractérisé en ce que** ladite augmentation de la sensibilité dudit transpondeur consiste en une augmentation au niveau de sensibilité précédent.

4. Procédé selon la revendication 2, **caractérisé en ce que** ladite augmentation de la sensibilité dudit transpondeur consiste en une augmentation au niveau de sensibilité maximale.

5. Procédé selon l'une des revendications 1 à 4, **caractérisé en ce que** lorsqu'un message détecté seulement partiellement ou de manière erronée indique que la porteuse reçue provient dudit au moins un lecteur ou émetteur, ladite sensibilité est à nouveau augmentée si elle a été précédemment diminuée.

6. Procédé selon l'une des revendications précédentes, **caractérisé en ce que** ladite diminution de ladite sensibilité est obtenue par la diminution du gain d'un amplificateur à gain fixe prévu dans ledit au moins un transpondeur pour amplifier des signaux entrant.

7. Procédé selon l'une des revendications 1 à 5, **caractérisé en ce que** ladite diminution de ladite sensibilité est obtenue par la diminution du gain maximal d'un amplificateur à gain variable prévu dans ledit au moins un transpondeur pour amplifier des signaux entrant.

8. Procédé selon la revendication 7, **caractérisé en ce qu'**il est prévu dans ledit au moins un transpondeur des moyens de mesure du gain réel dudit amplificateur lors de la réception d'un signal, notamment d'une porteuse parasite, ladite diminution dudit gain maximal étant effectué de manière à ce que sa valeur soit inférieure à celle dudit gain réel mesuré, au moins lorsque ce gain réel est supérieur à une valeur minimum.

9. Procédé selon l'une des revendications 1 à 5, **caractérisé en ce que** ladite diminution de ladite sensibilité est obtenue par une augmentation du facteur d'atténuation d'un atténuateur prévu dans ledit au moins un transpondeur pour diminuer l'amplitude de signaux entrant.

10. Transpondeur comprenant des moyens de communication par ondes électromagnétiques avec au moins un lecteur ou émetteur et des moyens de commande pour activer les moyens récepteurs de ce transpondeur de manière périodique dans un mode d'écoute, ces moyens récepteurs étant ainsi activés (ON) durant des périodes d'écoute entre lesquelles ils sont désactivés (OFF), **caractérisé en ce qu'**il comprend en outre des moyens pour varier sa sensibilité à la réception de signaux électromagnétiques, lesdits moyens de commande étant agencés pour diminuer ladite sensibilité, lorsqu'une porteuse parasite est détectée dans une période d'écoute et au moins lorsque la sensibilité du transpondeur dans cette période d'écoute est supérieure à une valeur minimum, au moins pour une prochaine période d'écoute, ces moyens de commande étant également agencés pour augmenter ladite sensibilité après cette au moins une prochaine période d'écoute pour au moins une période d'écoute ultérieure.

11. Transpondeur selon la revendication 10, **caractérisé en ce qu'**il comprend en outre un temporisateur (10) commandé pour mesurer une période donnée de sensibilité diminuée (T5) ou d'absence de réception de porteuse parasite (T4; T6) avec ladite sensibilité diminuée, lesdits moyens de commande étant agencés pour augmenter ladite sensibilité du transpondeur après ladite période donnée.

## Claims

1. Method of managing receiver means of a transponder (2; 20) adapted to communicate by electromagnetic waves with at least one reader or sender, in which method said receiver means of said transponder are activated periodically in a listening mode, said receiver means being thus activated (ON) during listening periods between which they are desactivated (OFF), said listening periods each having a predetermined first duration (T1) if no carrier is detected in a listening period and a second duration (T3) greater than said first duration if a carrier is detected in a listening period, **characterised in that**, if a detected carrier in a listening period is an unwanted carrier, the sensitivity of said transponder is reduced for at least a future listening period, at least if the sensitivity of said transponder is higher than a certain minimum value, and **in that**, after this at least a future listening period, said sensitivity is increased by transponder control means for at least a further listening period.

2. Communication method according to claim 1, **characterised in that** the sensitivity of said transponder is increased, if it has previously been reduced, after a given period (T5) of reduced sensitivity or a given period (T4; T6) of absence of reception of an unwanted carrier.

3. Method according to claim 2, **characterised in that** increasing the sensitivity of said transponder entails increasing it to a preceding level of sensitivity.

4. Method according to claim 2, **characterised in that** increasing the sensitivity of said transponder entails increasing it to a maximum sensitivity level.

5. Method according to any of claims 1 to 4, **characterised in that** said sensitivity is increased if it has previously been reduced and if a message detected only partially or erroneously indicates that the received carrier comes from said at least one reader or sender.

6. Method according to any of preceding claims, **characterised in that** the sensitivity is reduced by reducing the gain of a fixed gain amplifier in said at least one transponder for amplifying incoming signals.

7. Method according to any of claims 1 to 5, **characterised in that** the sensitivity is reduced by reducing the maximum gain of a variable gain amplifier in said at least one transponder for amplifying incoming signals.

8. Method according to claim 7, **characterised in that** said at least one transponder includes means for measuring the gain of said amplifier when receiving a signal, in particular an unwanted carrier, and the maximum gain is reduced to a value less than that of the measured gain, at least if said real gain is greater than a minimum value.

9. Method according to any of claims 1 to 5, **characterised in that** the sensitivity is reduced by increasing the attenuation factor of an attenuator in said at least one transponder for reducing the amplitude of incoming signals.

10. Transponder comprising means for communicating by means of electromagnetic waves with at least one reader or sender and control means for periodically activating said receiver means of said transponder in a listening mode, said receiver means being thus activated (ON) during listening periods between which they are desactivated (OFF), **characterised in that** it further comprises means for varying its sensitivity for receiving electromagnetic signals, said control means being adapted to reduce said sensitivity, at least for a future listening period, if an unwanted carrier is detected during a listening period and at least if the sensitivity of the transponder in said listening period is greater than a minimum value, said control means being further arranged for increasing said sensitivity after this at least a future listening period for at least a further listening period.

11. Transponder according to claim 10, **characterised in that** it further comprises a timer (10) for measuring either a given period (T5) of reduced sensitivity or a given period (T4; T6) of absence of reception of an unwanted carrier with said reduced sensitivity and said control means are adapted to increase the sensitivity of the transponder after said given period.

## Patentansprüche

1. Verfahren zum Steuern von Empfängermitteln eines Transponders (2; 20), ausgebildet zum Kommunizieren mittels elektromagnetischer Wellen mit wenigstens einem Leser oder Sender, in dem die Empfängermittel des Transponders periodisch in einem Empfangsmodus aktivierbar sind, wobei die Empfängermittel während Empfangsperioden aktiviert (ON) und zwischen diesen deaktiviert (OFF) werden, und wobei die Empfangsperioden jede eine erste vorbestimmte Dauer (T1) haben, wenn keine Trägerwelle festgestellt wird, und eine zweite Dauer (T3), die länger ist als die erste Dauer, wenn während einer Empfangsperiode eine Trägerwelle festgestellt wird, **dadurch gekennzeichnet, dass** dann, wenn eine in einer ersten Empfangsperiode festgestellte Trägerwelle sich als eine parasitäre Trägerwelle erweist, die Empfindlichkeit des Transponders für wenigstens eine nächste Empfangsperiode verringert wird, wenigstens wenn die Empfindlichkeit des Transponders höher als ein bestimmter Minimalwert ist, und dass nach der wenigstens einen nächsten Empfangsperiode die Empfindlichkeit durch Steuermittel des Transponders für wenigstens eine weitere Empfangsperiode erhöht wird.

2. Verfahren nach Anspruch 1, **dadurch gekennzeichnet, dass** die Empfindlichkeit des Transponders erhöht wird, wenn sie vorher verringert war, nach einer bestimmten Periode verringerter Empfindlichkeit (T5) oder der Abwesenheit des Empfangs einer parasitären Trägerwelle (T4; T6).

3. Verfahren nach Anspruch 2, **dadurch gekennzeichnet, dass** die Erhöhung der Empfindlichkeit des Transponders in einer Erhöhung auf den vorherigen Empfindlichkeitspegel besteht.

4. Verfahren nach Anspruch 2, **dadurch gekennzeichnet, dass** die Erhöhung der Empfindlichkeit des Transponders in einer Erhöhung auf den maximalen Empfindlichkeitspegel besteht.

5. Verfahren nach Anspruch 2, **dadurch gekennzeichnet, dass** dann, wenn eine nur teilweise oder in falscher Weise festgestellte Nachricht anzeigt, dass die empfangene Trägerwelle aus dem wenigstens einen Leser oder Sender stammt, die Empfindlichkeit aufs neue erhöht wird, wenn sie vorher verringert war.

6. Verfahren nach einem der vorhergehenden Ansprüche, **dadurch gekennzeichnet, dass** die Verringerung der Empfindlichkeit durch eine Verringerung des Verstärkungsfaktors eines Verstärkers mit festen Verstärkungen, der in dem wenigstens einen Transponder vorgesehen ist, um die eintreffenden Signale zu verstärken, bewirkt wird

7. Verfahren nach einem der Ansprüche 1 bis 5, **dadurch gekennzeichnet, dass** die Verringerung der Empfindlichkeit durch eine Verringerung des maximalen Verstärkungsfaktors eines variablen Verstärkers, der in dem wenigstens einen Transponder vorgesehen ist, um die eintreffenden Signale zu verstärken, bewirkt wird.

8. Verfahren nach Anspruch 7, **dadurch gekennzeichnet, dass** in dem wenigstens einen Transponder Messmittel für den tätsächliche Verstärkungsfaktor des Verstärkers während des Empfangs eines Signals, insbesondere einer parasitären Trägerwelle, vorgesehen sind, wobei die Verringerung des maximalen Verstärkungsfaktors so bewirkt wird, dass ihr Wert geringer als der Wert des gemessenen tatsächlichen Verstärkungsfaktors ist, wenigstens dann, wenn der tatsächliche Verstärkungsfaktor höher als ein Minimalwert ist.

9. Verfahren nach einem der Ansprüche 1 bis 5, **dadurch gekennzeichnet, dass** die Verringerung der Empfindlichkeit durch eine Erhöhung des Dämpfungsfaktors eines in dem wenigstens einen Transponder zur Verringerung der Amplitude von eintreffenden Signalen vorgesehenen Dämpfungsmittels bewirkt wird.

10. Transponder umfassend Mittel für eine Kommunikation mittels elektromagnetischer Wellen mit wenigstens einem Leser oder Sender und Steuermitteln für das Aktivieren von Empfängermitteln des Transponders auf eine periodische Weise im Empfangsmodus, wobei die Empfängermittel während Empfangsperioden aktiviert (ON) und zwischen diesen deaktiviert (OFF) werden, **dadurch gekennzeichnet, dass** er weiterhin Mittel für das Variieren seiner Empfindlichkeit bei Empfang von elektromagnetischen Signalen umfasst, wobei die Steuermittel zum Verringern der Empfindlichkeit ausgebildet sind, wenn in einer Empfangsperiode eine parasitäre Trägerwelle festgestellt wird und wenigstens wenn die Empfindlichkeit des Transponders in der Empfangsperiode höher als ein Minimalwert ist, wenigstens für eine nächste Empfangsperiode, und wobei die Steuermittel gleichermaßen ausgebildet sind zum Erhöhen der Empfindlichkeit nach der wenigstens einen nächsten Empfangsperiode für wenigstens eine weitere Empfangsperiode.

11. Transponder nach Anspruch 10, **dadurch gekennzeichnet, dass** er weiterhin Verzögerungsmittel (10) umfasst, die zum Messen einer bestimmten Periode verringerter Empfindlichkeit (T5) oder in Abwesenheit des Empfangs von parasitären Trägerwellen (T4; T6) mit der verringerten Empfindlichkeit gesteuert werden, wobei die Steuermittel zum Erhöhen der Empfindlichkeit des Transponders nach der bestimmten Periode ausgebildet sind.
